# EUROPÄISCHE PATENTANMELDUNG

(11) **EP 3 827 699 A1**
(43) Veröffentlichungstag der Anmeldung: **02.06.2021**
(21) Anmeldenummer: 19212553.2
(22) Anmeldetag: 29.11.2019
(51) Int. Cl.: A45D 40/16, B29C 33/50

(54) **VORRICHTUNG ZUM HERSTELLEN VON STIFTFÖRMIGEN PRODUKTEN, INSBESONDERE LIPPENSTIFTEN, UND VERFAHREN ZUM HERSTELLEN VON SOLCHEN PRODUKTEN**

(71) Anmelder: Weckerle GmbH, 82362 Weilheim (DE)
(72) Erfinder: Rankl, Fabian, 86981 Kinsau (DE)
(74) Vertreter: Kramer Barske Schmidtchen Patentanwälte PartG mbB

(57) **Zusammenfassung**

Eine Vorrichtung zum Herstellen von stiftförmigen Produkten enthält eine Kammer (13), die mit einem Pneumatikanschluss (14) verbunden ist, eine elastische Form (17) für das stiftförmige Produkt, die in der Kammer (13) angeordnet werden kann, einen Halter (18) für die elastische Form (17) in der Kammer (13), der mindestens zwei in radialer Richtung der elastischen Form (17) bewegbare Halterschalen (19) aufweist. Die Halterschalen (19) umschließen die elastische Form (17) in Umfangsrichtung. Ferner ist ein Bewegungsmechanismus (15) für die Halterschalen (19) vorgesehen, wobei der Bewegungsmechanismus (15) ein in axialer Richtung der elastischen Form (17) bewegbares Stellglied (21) enthält und das Stellglied (21) mit den Halterschalen (19) derart verbunden ist, dass eine axiale Bewegung des Stellglieds (21) die Halterschalen (19) in radialer Richtung der elastischen Form (17) bewegt.

## Beschreibung

### GEBIET DER ERFINDUNG

Die vorliegende Erfindung betrifft eine Vorrichtung zum Herstellen von stiftförmigen Produkten, insbesondere Lippenstiftminen oder Lippenstiften, insbesondere aus pastösen Massen, sowie ein Verfahren zum Herstellen von solchen stiftförmigen Produkten. Insbesondere betrifft die Erfindung eine Vorrichtung und ein Verfahren, mit denen auch solche stiftförmigen Produkte oder Lippenstiftminen hergestellt werden können, welche ornamentförmige Muster oder Prägungen auf ihrer Oberfläche aufweisen.

### STAND DER TECHNIK

Vorrichtungen und Formen zur Herstellung von stiftförmigen Produkten, wie Lippenstiftminen, sowie entsprechende Verfahren sind bekannt. Dabei werden Gießformen, die starr oder flexibel sein können, mit einer pastösen Masse im flüssigen Zustand gefüllt. Die Masse wird anschließend in der Form ausgehärtet und aus der Gießform entnommen.

Insbesondere dann, wenn eine Lippenstiftmine derart hergestellt und entformt werden soll, dass der sichtbare Teil der Lippenstiftmine oder des anderen stiftförmigen Produkts eine durchgehende und glatte Oberfläche aufweist oder ornamentförmige Prägungen oder Muster auf der Oberfläche in definierten Bereichen erscheinen sollen, ist es bekannt, dafür Vorrichtungen und Verfahren zu verwenden, welche eine flexible Form aufweisen, in die die pastöse Masse eingefüllt wird. Nach der Abkühlung der pastösen Masse wird diese bzw. das stiftförmige Produkt aus der flexiblen Form dadurch entfernt, dass in einer Kammer um die flexible Form ein Vakuum oder Unterdruck erzeugt wird, so dass sich die flexible Form von dem fertigen stiftförmigen Produkt ablöst.

Beispielsweise ist aus der DE 2007 001 644 A1 eine Vorrichtung zum Herstellen von Lippenstiften bekannt, bei der eine elastische Formvorrichtung vorgesehen ist, die eine Vertiefung zum Formen und Einfüllen eines Lippenstiftelements aufweist. Ferner sind drei oder mehr gebogene Formteile vorgesehen, die beweglich über der elastischen Formvorrichtung zum Bilden einer Öffnung in den Formteilen angebracht sind, wenn die gebogenen Formteile radial nach innen und zueinander bewegt werden. Die elastische Form wird mittels Zahnrädern vom fertigen Produkt weggezogen.

Aus der EP 0686468 A1 ist eine Vorrichtung zum Herstellen von Lippenstiften bekannt, bei welcher in einer elastischen Form ein ausgehärteter Lippenstift zweistufig entformt wird, indem zunächst ein oberer Teil der elastischen Form mittels eines Unterdrucks vom fertigen Produkt weggezogen wird, wobei ein unterer Teil der elastischen Form durch einen Formhalter gehalten wird. Der Formhalter seinerseits wird ebenfalls durch Druck in seiner Position gehalten und, nachdem der Druck vom Formhalter entfernt ist, d.h. ein Unterdruck auf den Formhalter aufgebracht wird, bewegt sich dieser schräg nach außen im dafür vorgesehenen Hohlraum, so dass auch die elastische Form sich vom fertigen Lippenstift löst.

Aus der EP 2 740 385 A1 ist eine Vorrichtung zum Herstellen von Lippenstiften mit einer flexiblen Form bekannt, bei der die Vorrichtung ein flexibles Formteil aufweist, das in einer Kammer angeordnet ist. Ein Formhalter umschließt einen Teil des flexiblen Formteils. Wenn eine pastöse Masse in das flexible Formteil eingefüllt ist, das im unteren Bereich vom Formhalter gehalten wird und die Masse entsprechend ausgehärtet ist, wird ein Unterdruck auf die Kammer aufgebracht, so dass sich ein oberer Teil der elastischen Form vom stiftförmigen Produkt löst. Anschließend schwenkt der Formhalter um Drehgelenke an seinen unteren Enden auf, so dass der Unterdruck auch auf den unteren Teil der elastischen Form wirkt und die elastische Form sich vollständig vom stiftförmigen Produkt löst, so dass dieses entnommen werden kann. Der Formhalter seinerseits ist dabei mittels des Drucks bzw. Unterdrucks an die elastische Form gepresst bzw. wird von dieser gelöst.

### AUFGABE DER ERFINDUNG

Davon ausgehend ist es Aufgabe der Erfindung, einen zuverlässigen Öffnungsmechanismus für die elastische Form und den sie umgebenden Formhalter vorzusehen, mit welchem es möglich ist, auf dem stiftförmigen Produkt sowohl glatte Oberflächen als auch Prägungen und Ornamente zu erzeugen, ohne dass diese beim Entnehmen des stiftförmigen Produkts aus der elastischen Form und insbesondere beim Entfernen des Formhalters von der elastischen Form beschädigt werden., als auch den Öffnungsmechanismus einfach und zuverlässig zu gestalten. Ferner ist es Aufgabe der Erfindung, ein entsprechendes Verfahren zum Herstellen von Lippenstiftminen bzw. stiftförmigen Produkten vorzusehen.

### DARSTELLUNG DER ERFINDUNG

Diese Aufgabe wird mit einer Vorrichtung mit den Merkmalen des Anspruchs 1 und einem Verfahren mit den Merkmalen des Anspruchs 11 gelöst. Bevorzugte Ausführungsformen sind in den abhängigen Ansprüchen angegeben.

Die erfindungsgemäße Vorrichtung zum Herstellen von stiftförmigen Produkten enthält eine mit einem Pneumatikanschluss verbundene Kammer, eine elastische Form für das stiftförmige Produkt, die in der Kammer angeordnet werden kann, einen Halter für die elastische Form in der Kammer, der mindestens zwei in radialer Richtung der elastischen Form bewegbare Halterschalen aufweist, die die elastische Form in radialer Richtung umschließen, sowie einen Bewegungsmechanismus für die Halterschalen. Der Bewegungsmechanismus für die Halterschalen hat ein in axialer Richtung der elastischen Form bewegbares Stellglied, das mit den Halterschalen derart verbunden ist, dass eine axiale Bewegung des Stellglieds die Halterschalen in radialer Richtung der elastischen Form bewegt und führt.

Dabei ist, wie in der gesamten Beschreibung, unter axialer Richtung jeweils diejenige Richtung zu verstehen, entlang derer die Axialrichtung des fertigen stiftförmigen Produkts läuft. Die radiale Richtung ist entsprechend radial (und senkrecht) zu dieser axialen Richtung. Ferner ist mit "oben" in der Vorrichtung derjenige Teil der Vorrichtung bezeichnet, von wo aus eine pastöse Masse zum Erzeugen des stiftförmigen Produkts eingefüllt wird. "Unten" bezeichnet entsprechend die in axialer Richtung des stiftförmigen Produkts gegenüberliegende Seite.

Der Erfindung liegt der Gedanke zugrunde, die elastische Form derart mittels eines Halters zu halten, dass der Halter rein in radialer Richtung öffnen kann. Wenn der Halter nur in einem Bereich der elastischen Form angebracht ist, z.B. in einem unteren Bereich der elastischen Form, so ermöglicht dies ein zweistufiges Öffnen der elastischen Form mittels eines in der Kammer erzeugbaren Unterdrucks. Damit ein möglichst einfacher und zuverlässiger Bewegungsmechanismus für die Halterschalen vorgesehen wird, werden die Halterschalen über ein Stellglied bewegt, das sich seinerseits in axialer Richtung der Vorrichtung bewegen kann. Dazu ist das Stellglied in Eingriff mit den Halterschalen, so dass eine axiale Bewegung des Stellglieds zu einer radialen Bewegung der Halterschalen führt. Wenn beispielsweise das Stellglied in axialer Richtung nach unten aus einer geschlossenen Position der Halterschalen bewegt wird, so führt dies zu einer Öffnungsbewegung der Halterschalen in der Richtung radial nach außen. Somit kann für die Halterschalenöffnungsbewegung eine rein radiale Bewegung, d.h. eine Bewegung, die ausschließlich in radialer Richtung erfolgt, vorgesehen werden. Dies hat den Vorteil, dass auch empfindliche, wie z.B. glatte, Oberflächen des stiftförmigen Produkts nicht durch Gleitbewegungen oder Verschiebebewegungen der Halterschalen möglicherweise beeinträchtigt werden, sondern vielmehr die Halterschalen sich unmittelbar und direkt von der elastischen Form ablösen, wobei dies an allen Stellen der elastischen Form im Wesentlichen gleichzeitig geschieht. Zudem ist durch eine Hubbewegung in axialer Richtung, der in eine Öffnungs- und Schließbewegung des Halters in radialer Richtung umgesetzt wird, des Bewegungsmechanismus der Bewegungsmechanismus verhältnismäßig einfach und zuverlässig gestaltet und ermöglicht eine gleichmäßige, gesteuerte Bewegung der Öffnungs- und Schließbewegung der Halterschalen. Dadurch dass, wie bereits bekannt, eine elastische Form zum Einfüllen der pastösen, den Lippenstift formenden Masse verwendet werden kann, sind nahezu beliebig geformte Oberflächen, ebenso wie sehr glatte Oberflächen des fertigen Produkts möglich.

Nach einer bevorzugten Ausführungsform sind die Halterschalen in einem unteren Bereich der elastischen Form, weiter bevorzugt ausschließlich in einem unteren Bereich der elastischen Form vorgesehen. Dies ermöglicht es, die elastische Form zweistufig zu öffnen, indem zunächst bei an der elastischen Form anliegenden Halterschalen in der Kammer, in der sich die elastische Form befindet, ein Unterdruck erzeugt wird und anschließend, wenn ein oberer Teil der elastischen Form von dem fertigen stiftförmigen Produkt aufgrund des Unterdrucks abgelöst ist, die Halterschalen sich weg von der elastischen Form radial nach außen bewegen, so dass der Unterdruck auch auf den unteren Teil der elastischen Form wirkt und damit auch der untere Teil der elastischen Form sich von dem fertigen stiftförmigen Produkt löst.

Nach einer besonders bevorzugten Ausführungsform ist die elastische Form eine Silikonform, was es ermöglicht, dass besonders glatte und gleichmäßige Oberflächen, insbesondere für Lippenstifte als dem stiftförmigen Produkt, erzeugt werden können. Selbstverständlich kann die Vorrichtung auch für andere stiftförmige Produkte eingesetzt werden, die ähnliche Anforderungen wie z.B. Lippenstifte aufweisen.

Vorzugsweise sind mindestens drei Halterschalen in dem Bewegungsmechanismus vorgesehen, die in Umfangsrichtung um die elastische Form herum angeordnet sind. Dies ermöglicht es, dass ein gleichmäßiger Druck auf die elastische Form durch die Halterschalen ausgeübt werden kann und gleichzeitig der Bewegungsmechanismus aufgrund von einer überschaubaren Anzahl an Halterschalen derart einfach bleibt, dass er zuverlässig arbeitet.

Nach einer besonders bevorzugten Ausführungsform ist in Umfangsrichtung um die Halterschalen herum eine Spanneinrichtung vorgesehen, welche die Halterschalen in radialer Richtung einwärts vorspannt. Dabei ist Spanneinrichtung bevorzugterweise ein druckgesteuertes Hohlkammerprofil, welches bei Aufbringen eines Drucks ein größeres Volumen einnimmt, insbesondere derart, dass es beispielsweise zwischen der Innenwand der Kammer und der Außenwand der Halterschalen dichtet oder nahezu dichtet. Damit kann, wenn der Druck aus dem druckgesteuerten Hohlkammerprofil entlastet wird bzw. die Spanneinrichtung allgemein gelöst wird, eine Bewegung der Halterschalen ermöglicht werden, die anderweitig weiter unterbunden ist. Wenn die Spanneinrichtung derart vorgesehen ist, dass sie zwischen der Kammerinnenwand und den Halterschalenaußenwänden dichtend ist, wenn sie im gespannten Zustand ist, unterstützt dies zudem das zweistufige Öffnen der Vorrichtung zum Herstellen von stiftförmigen Produkten, da in diesem Fall mit ein und demselben Unterdruckmechanismus für die Kammer der Unterdruck stufenweise auf verschiedene Bereiche der elastischen Form wirken kann. Dazu ist die Spanneinrichtung bevorzugterweise in der Kammer vorgesehen. Eine solche zusätzliche Spanneinrichtung kann auch mit nicht rein radial öffnenden Halterschalen verwendet werden, sondern z.B. mit unter einem Winkel, der anders als 90° zur Axialrichtung ist, öffnenden Halterschalen, wenn dies z.B. in Abhängigkeit von der Form des fertigen Produkts wünschenswert ist.

Nach einer weiteren bevorzugten Ausführungsform enthält der Bewegungsmechanismus für die Halterschalen ein Stellglied, das einen oberen Abschluss aufweist, der in Eingriff mit den Halterschalen bzw. mit diesen formschlüssig verbunden ist, so dass eine Bewegung des Stellglieds in axialer Richtung eine Bewegung der Halterschalen in radialer Richtung bewirkt. Besonders bevorzugt ist es dabei, dass eine Bewegung des Stellglieds in axialer Richtung nach unten eine Bewegung der Halterschalen in radialer Richtung nach außen bewirkt. Dadurch kann die Schwerkraft zusätzlich für die Bewegung des Stellglieds zum Öffnen der Vorrichtung und der elastischen Form ausgenutzt werden.

Beispielsweise wird der Formschluss bzw. der formschlüssige Eingriff dadurch erzeugt, dass das Stellglied als oberen Abschluss einen Aufsatz aufweist, der umgekehrt kegelstumpfförmig ist, d.h. nach unten konisch zulaufend ist, wobei die Halterschalen Kontaktflächen in Eingriff mit der Umfangsfläche der Kegelstumpfform aufweisen, also z.B. insgesamt eine Trichterform bilden. Wird diese umgekehrte Kegelstumpfform entlang der Kontaktflächen der Halterschalen nach unten bewegt, so weichen die Halterschalen in radialer Richtung nach außen aus und lösen sich von der elastischen Form, so dass diese wiederum aufgrund des in der Kammer herrschenden Unterdrucks sich vom fertigen stiftförmigen Produkt ablösen kann. Dies stellt einen einfachen und zuverlässigen Mechanismus zum Öffnen der Halterschalen dar, der zusätzlich durch die Schwerkraft unterstützt ist, insbesondere dann, wenn der Mechanismus derart gestaltet ist, dass das Stellglied im geschlossenen Zustand der Halterschalen, also wenn es nach oben bewegt ist, mit Druck beaufschlagt ist, welcher dann, wenn die Halterschalen geöffnet werden sollen, aufgehoben wird, d.h. das Stellglied, wie z.B. ein Hubzylinder, drucklos geschaltet wird, so dass sich das Stellglied mit dem oberen Abschluss bzw. Aufsatz nach unten bewegt und damit die Halterschalen geöffnet werden. Neben der beschriebenen Kegelstumpfform sind für den Aufsatz bzw. oberen Abschluss des Stellglieds andere Formen denkbar, welche eine Axialbewegung des Stellglieds in eine radiale Bewegung der Halteschalen umsetzen, z.B. Nut-Feder-Profile, die geeignet angepasst sind.

Ein erfindungsgemäßes Verfahren, das eine Vorrichtung zum Herstellen von stiftförmigen Produkten, wie sie beschrieben ist, verwendet, enthält die Schritte des Befüllens der elastischen Form mit einer pastösen Masse und das Einbringen der elastischen Form in der Kammer, wobei diese Schritte auch in umgekehrter Reihenfolge durchgeführt werden können. Die elastische Form wird anschließend mittels der Halterschalen des Halters gespannt und von diesen umschlossen. Anschließend wird ein Unterdruck in der Kammer erzeugt, so dass sich der nicht durch die Halterschalen gespannte Teil der elastischen Form von dem stiftförmigen Produkt löst, das ausgekühlt bzw. ausgehärtet ist, soweit, dass ein Entformen möglich ist. Anschließend werden die Halterschalen mittels des Bewegungsmechanismus geöffnet, so dass sich durch eine Bewegung des Bewegungsmechanismus in axialer Richtung die Halterschalen in radialer Richtung nach außen bewegen. Dies führt dazu, dass durch den in der Kammer herrschenden Unterdruck sich der restliche Teil der elastischen Form von dem stiftförmigen Produkt löst und, nach Aufheben des Unterdrucks in der Kammer, das stiftförmige Produkt aus der Kammer entnommen werden kann. Somit ist mittels des Verfahrens ein Entformen eines stiftförmigen Produkts aus der elastischen Form möglich, bei welcher auch empfindliche Oberflächen des stiftförmigen Produkts durch die Bewegungen des Formhalters bzw. der elastischen Form nicht negativ beeinträchtigt werden.

Bevorzugterweise ist um die Halterschalen herum eine Spanneinrichtung vorgesehen, welche die Halterschalen in radialer Richtung einwärts vorspannt, und das Verfahren weist im Schritt des Spannens der elastischen Form mit den Halterschalen weiter das Beaufschlagen der Spanneinrichtung auf, damit die Halterschalen mittels der Spanneinrichtung radial nach innen vorgespannt werden. Ferner weist das Verfahren in diesem Fall vor dem Schritt des Öffnens der Halterschalen das Lösen der Beaufschlagung der Spanneinrichtung auf, so dass sich der Unterdruck, der in der Kammer herrscht, auch auf den übrigen Teil der Kammer ausdehnt und die elastische Form im bislang von den Halterschalen gehaltenen Teil der Form sich ebenfalls vom stiftförmigen Produkt löst.

### KURZE BESCHREIBUNG DER FIGUREN

Nachfolgend wird die Erfindung beispielhaft anhand der beigefügten Figuren beschrieben, in denen:
- Fig. 1: eine perspektivische Ansicht einer Baugruppe mit drei erfindungsgemäßen Vorrichtungen zeigt;
- Fig. 2: eine Schnittansicht durch eine erfindungsgemäße Vorrichtung ist; und
- Fig. 3A bis 3C: die Funktionsweise der Erfindung mit Hife von drei entsprechenden Schnittansichten entsprechend zu Fig. 2 erläutern, die ein Entformen eines fertigen Lippenstiftprodukts veranschaulichen.

### DETAILLIERTE BESCHREIBUNG BEVORZUGTER AUSFÜHRUNGSFORMEN

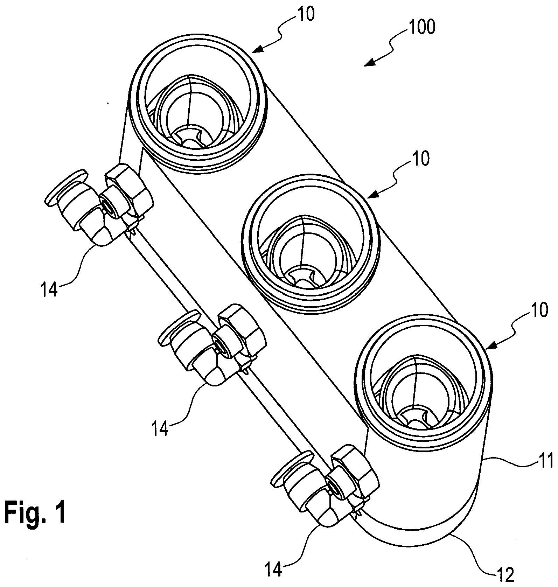

Fig. 1 zeigt eine Gesamtbaugruppe 100 mit drei Vorrichtungen 10 zum Herstellen von stiftförmigen Produkten in perspektivischer Ansicht. Selbstverständlich können nach Bedarf in einer Gesamtbaugruppe 100 mehr oder weniger als drei Vorrichtungen 10 enthalten sein, beispielsweise nur eine Vorrichtung oder aber eine größere Vielzahl davon, wie beispielsweise fünf oder zehn. Die Gesamtbaugruppe 100 besteht dabei aus einer Oberschale 11 und einem Unterbau 12, die miteinander beispielsweise durch Verschrauben verbunden werden. In der in Fig. 1 dargestellten Ausführungsform sind, da drei Vorrichtungen 10 in der Gesamtbaugruppe 100 vorgesehen sind, in der Oberschale 11 drei linear angeordnete Vakuumkammern 13 enthalten. Für jede der Vakuumkammern 13 ist in der Oberschale 11 ein Pneumatikanschluss 14 vorgesehen.

In dem Unterbau 12 befindet sich insbesondere ein Bewegungsmechanismus 15 zum Steuern und Bewegen des Entformungsvorgangs für das hergestellte stiftförmige Produkt. Auch dieser Bewegungsmechanismus 15 ist in der dargestellten Ausführungsform dreifach vorgesehen, jeweils einer für jede der Vakuumkammern 13.

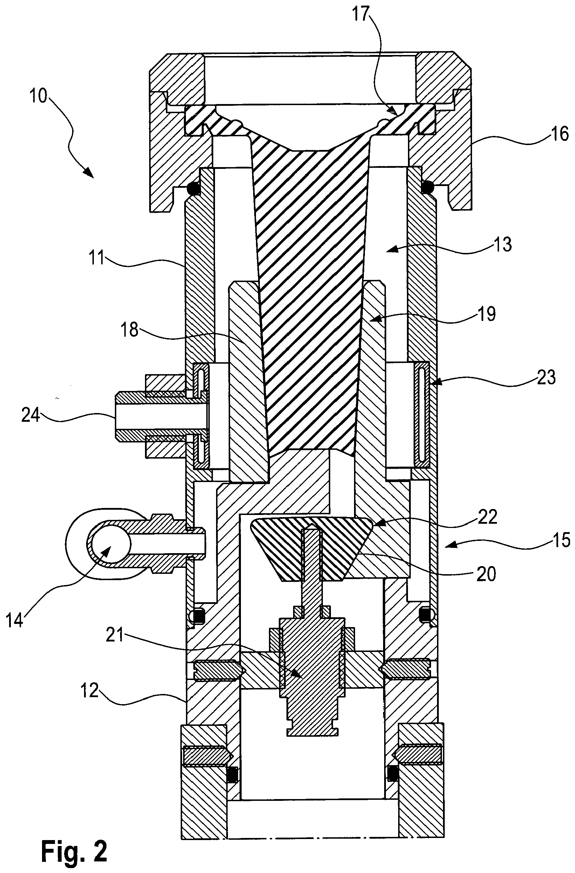

Der Aufbau der Vorrichtung 10 zum Herstellen von stiftförmigen Produkten, einschließlich des Bewegungsmechanismus 15, wird nachfolgend anhand der Querschnittsansicht in Fig. 2 näher beschrieben.

Wie in Fig. 2 gezeigt ist, ist die Oberschale 11 mit dem Unterbau 12 derart verbunden, beispielsweise verschraubt, dass in der Oberschale 11 eine Vakuumkammer 13 ausgebildet wird. Die Kammer 13 ist an ihrer Oberseite durch einen oberen Flansch 16 abgeschlossen, mit dem eine elastische Form 17, welche die eigentliche Form 17 zum Aufnehmen einer pastösen Masse zum Ausbilden des stiftförmigen Produkts, beispielsweise eines Lippenstifts, bildet, gehalten ist. Dabei kann die Vorrichtung 10 so gestaltet sein, dass die pastöse Masse, welche den Stift formt, in die elastische Form 17 eingefüllt wird, wenn sich die elastische Form 17 bereits in der Vakuumkammer 13 befindet, oder sie kann so gestaltet sein, dass die elastische Form 13 mit der darin eingefüllten pastösen Masse nur zum Auskühlen und Entformen in die Vakuumkammer 13 eingesetzt wird.

Ferner ist, wie in Fig. 2 erkennbar ist, in die Kammer 13 ein Halter 18 für die elastische Form eingefügt. Der Halter 18 besteht in der in den Figuren dargestellten Ausführungsform aus drei Halterschalen 19, die die elastische Form 17 in Umfangsrichtung in einem unteren Bereich der elastischen Form 17, beispielsweise wie in Fig. 2 dargestellt, etwa in der unteren Hälfte der elastischen Form, umschließen. Die Halterschalen 19 sind derart angeordnet, dass sie jeweils radial nach außen bewegbar sind und sich somit von der in Fig. 2 dargestellten geschlossenen Position, in der sie eng anliegend an die elastische Form 17 sind, in die offene Position, in der sie entfernt von der elastischen Form 17 sind, bewegen können.

Zur Bewegung sind die Halterschalen 19 auf einem Bewegungsmechanismus 15, der in dem Unterbau 12 angeordnet ist, gelagert. Bei der in Fig. 2 dargestellten Ausführungsform ist die Lagerung dabei derart, dass die Halterschalen 19 jeweils in einem formschlüssigen Eingriff mit dem Bewegungsmechanismus 15, der später im Einzelnen beschrieben wird, über einen kegelstumpfförmigen Aufsatz 22 des Bewegungsmechanismus 15 und eine entsprechende Formfläche 20 an den Halterschalen 19 jeweils sind.

Der Bewegungsmechanismus 15, wie er in Fig. 2 gezeigt ist, weist einen Hubzylinder als Stellglied 21 auf, der seinerseits beispielsweise pneumatisch gesteuert sein kann. Der Hubzylinder 21 hat an seinem oberen Abschluss einen Aufsatz 22, der lösbar mit dem Hubzylinder 21 verbunden ist und seinerseits kegelstumpfförmig ist, wobei die Anordnung derart ist, dass der Aufsatz 22 nach unten kegelförmig, konisch zuläuft. Der Aufsatz 22 ist in Eingriff mit der jeweiligen Formfläche 20 einer Halterschale 19. Die Formflächen 20 der Halterschalen 19 bilden gemeinsam eine trichterförmige Form. Die Bewegungsrichtung des Hubzylinders 21 ist in vertikaler Richtung, d.h. in Oben-Unten-Richtung, wobei in Fig. 2 oben auch die Oberseite der Figur ist. Wenn der Hubzylinder 21 sich zusammen mit dem Aufsatz 22 nach unten bewegt aus der in Fig. 2 dargestellten Position, werden aufgrund des Eingriffs der Halterschalen 19 mit dem Aufsatz 22 die Halterschalen 19 durch die Formflächen 20, die in Eingriff mit dem Aufsatz 22 sind, radial nach außen gedrückt.

Die in Fig. 2 dargestellte Vorrichtung weist ferner in der Oberschale 11 an einer Position, an der in Längserstreckung der Vorrichtung 10 die Halterschalen 19 vorgesehen sind, ein Hohlkammerhubprofil 23 als Spanneinrichtung auf, das die Halterschalen radial außerhalb umgibt. Das Hohlkammerhubprofil 23 dient als Spanneinrichtung für die Halterschalen 19. Insbesondere ist das Hohlkammerhubprofil 23, das auch als Hohlkammerprofil 23 beispielsweise ausgebildet sein kann, derart druckgesteuert, dass beim Zuführen von Druck über beispielsweise die Leitung 24 das Hohlkammerhubprofil sich ausdehnt und damit die Halterschalen 19 in radialer Richtung einwärts vorbelastet. Mittels der Spanneinrichtung, die in der in Fig. 2 dargestellten Ausführungsform als Hohlkammerhubprofil 23 ausgeführt ist, können die Halterschalen 19 zuverlässig in ihrer an die elastische Form 17 anliegenden Position gehalten werden. Gleichzeitig kann, wenn dies gewünscht ist, das mit Druck beaufschlagte Hohlkammerhubprofil 23 die Vakuumkammer 13 in zwei Teilkammern teilen.

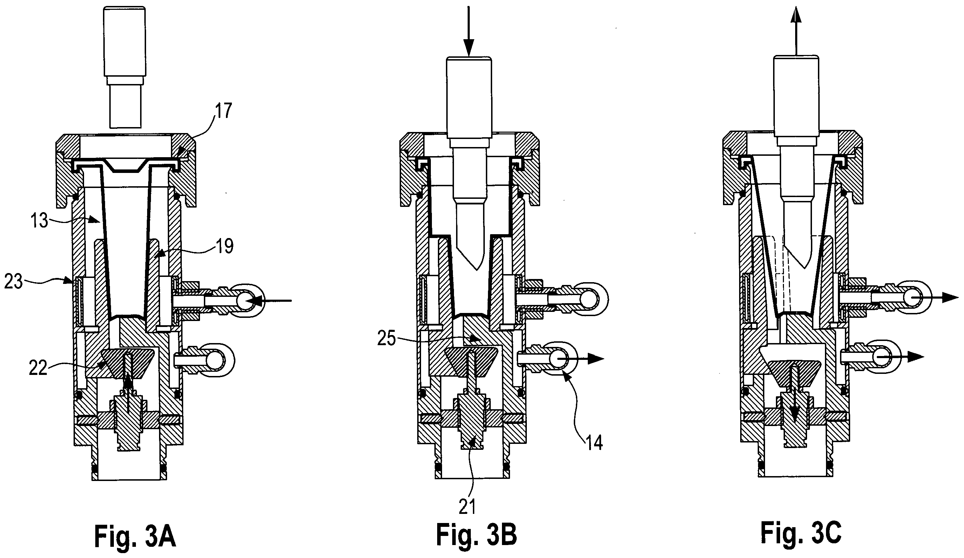

Nachfolgend wird mittels Fig. 3A, 3B und 3C der Entformvorgang für das stiftförmige Produkt aus der Vorrichtung 10 beschrieben.

Die elastische Form 17 wird nach dem Abkühlen der pastösen Masse, die in die elastische Form eingefüllt ist, in zwei Stufen entformt. Zunächst (siehe Fig. 3A) wird die elastische Form 17 in die Vorrichtung 10 eingeführt und in der Vorrichtung 10 mittels der Halterschalen 19, die in der dargestellten Ausführungsform als drei Halterschalen 19 des Halters 18 vorhanden sind, gespannt. Dazu wird Druckluft durch die Druckleitung 24 in das Hohlkammerhubprofil 23 eingeführt. Dadurch dehnt sich das Hohlkammerhubprofil 23 aus und drückt die Halterschalen 19 gegen die elastische Form 17. Zudem wird die Vorrichtung durch das Einbringen der elastischen Form 17 in sie mittels des Flansches 16 derart geschlossen, dass eine Vakuumkammer 13 um die elastische Form herum in der Oberschale 11 der Vorrichtung 10 ausgebildet wird.

Im nächsten Schritt wird Vakuum durch den Pneumatikanschluss 14 in die Vakuumkammer 13 eingeleitet. Dies ist in Fig. 3B dargestellt. Aufgrund des Unterdrucks öffnet sich der obere Teil der elastischen Form 17, der nicht durch den Halter 18, insbesondere die Halterschalen 19 und die Spanneinrichtung als Hohlkammerhubprofil 23 gehalten wird. Die Position der Halterschalen 19 wird dabei mit Hilfe des Hubzylinders 21 des Bewegungsmechanismus 15 der Vorrichtung 10, insbesondere mittels des Aufsatzes 22, gehalten, d.h., der Hubzylinder 21 ist ebenfalls mit Druck beaufschlagt, ebenso wie das Hohlkammerhubprofil 23.

In der zweiten Stufe der Entformung werden das Hohlkammerhubprofil 23 sowie der Hubzylinder 21 jeweils drucklos geschaltet. Dies ist in Fig. 3C gezeigt. Dies führt dazu, dass der Hubzylinder 21 federgedämpft (luftfedergedämpft) durch die Schwerkraft, die auf ihn einwirkt, nach unten gezogen wird und gleichzeitig die Halterschalen 19 des Halters 18 Bewegungsfreiraum dadurch bekommen, dass das Hohlkammerhubprofil 23 nicht mehr vollständig ausgedehnt ist und somit eine radiale Auswärtsbewegung der Halterschalen 19 erlaubt, da ein Zwischenraum zwischen dem Hohlkammerhubprofil 23 und den Halterschalen 19 durch das Zurückziehen (in radialer Richtung nach außen) des Hohlkammerhubprofils 23 entsteht. Somit wird auch die elastische Form 17 nicht mehr durch die Halterschalen 19 bzw. den Halter 18 und das Hohlkammerhubprofil 23 gehalten, so dass sie sich mittels des Vakuums, das in der Vakuumkammer 13 vorhanden ist, ebenfalls vom fertigen stiftförmigen Produkt löst. Danach wird die Vorrichtung 10 geöffnet, wodurch das Vakuum in der Vakuumkammer 13 aufgehoben wird, und das fertige stiftförmige Produkt kann aus der Vorrichtung 10 entnommen werden.

Somit ist es mit der beschriebenen Vorrichtung 10 und dem beschriebenen Verfahren möglich, stiftförmige Produkte aus pastösen Massen in einer elastischen Form 17 herzustellen und anschließend aus der elastischen Form 17 zu entfernen, ohne dass eine Relativbewegung von einem an dem fertigen stiftförmigen Produkt anliegenden Bauteil in axialer Richtung erfolgt. Vielmehr werden die Halterschalen 19, ebenso wie das Hohlkammerhubprofil 23 und damit auch die elastische Form 17, ausschließlich in radialer Richtung von dem stiftförmigen Produkt weg bewegt. Damit wird ermöglicht, dass auch empfindliche Oberflächen des stiftförmigen Produkts gleichmäßig und ggf. mit gewünschten Prägungen oder Ornamenten hergestellt und geformt werden können.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 10: Vorrichtung
- 11: Oberschale
- 12: Unterbau
- 13: Vakuumkammer
- 14: Pneumatikanschluss
- 15: Bewegungsmechanismus
- 16: Flansch
- 17: elastische Form
- 18: Halter
- 19: Halterschale
- 20: Formfläche
- 21: Stellglied (Hubzylinder)
- 22: Aufsatz
- 23: Hohlkammerhubprofil (Spanneinrichtung)
- 24: Druckleitung
- 100: Gesamtbaugruppe

## Patentansprüche

1. Vorrichtung (10) zum Herstellen von stiftförmigen Produkten, enthaltend:
eine Kammer (13), die mit einem Pneumatikanschluss (14) verbunden ist,
eine elastische Form (17) für das stiftförmige Produkt, die in der Kammer angeordnet werden kann,
einen Halter (18) für die elastische Form (17) in der Kammer (13), der mindestens zwei in radialer Richtung der elastischen Form (17) bewegbare Halterschalen (19) aufweist, die die elastische Form (17) in Umfangsrichtung umschließen,
einen Bewegungsmechanismus (15) für die Halterschalen (19), wobei der Bewegungsmechanismus (15) ein in axialer Richtung der elastischen Form (17) bewegbares Stellglied (21) enthält und das Stellglied (21) mit den Halterschalen (19) derart verbunden ist, dass eine axiale Bewegung des Stellglieds (21) die Halterschalen (19) in radialer Richtung der elastischen Form (17) bewegt.

2. Vorrichtung (10) nach Anspruch 1, wobei die Halterschalen (19) in einer variablen Länge und in einem unteren Bereich der elastischen Form (17) vorgesehen sind.

3. Vorrichtung (10) nach Anspruch 1 oder 2, wobei die elastische Form (17) eine Silikonform ist.

4. Vorrichtung (10) nach einem der vorhergehenden Ansprüche, wobei mindestens drei Halterschalen (19) vorgesehen sind.

5. Vorrichtung (10) nach einem der vorhergehenden Ansprüche, wobei um die Halterschalen (19) herum eine Spanneinrichtung (23) vorgesehen ist, welche die Halterschalen (19) in radialer Richtung einwärts vorspannt.

6. Vorrichtung (10) nach Anspruch 5, wobei die Spanneinrichtung (23) ein druckgesteuertes Hohlkammerprofil (23) enthält.

7. Vorrichtung (10) nach Anspruch 5 oder 6, wobei die Spanneinrichtung (23) in der Kammer vorgesehen ist.

8. Vorrichtung (10) nach einem der vorhergehenden Ansprüche, wobei das Stellglied ein Hubzylinder (21) ist.

9. Vorrichtung (10) nach einem der vorhergehenden Ansprüche, wobei das Stellglied (21) einen oberen Abschluss aufweist, der formschlüssig in Eingriff mit den Halterschalen (19) ist, so dass eine Bewegung des Stellglieds (21) in axialer Richtung eine Bewegung der Halterschalen (19) in radialer Richtung bewirkt.

10. Vorrichtung (10) nach Anspruch 9, wobei der obere Abschluss ein Aufsatz (22) ist, der nach unten zulaufend kegelstumpfförmig ist, und die Halterschalen (19) Kontaktflächen in Eingriff mit der Umfangsfläche der Kegelstumpfform aufweisen.

11. Verfahren zum Herstellen von stiftförmigen Produkten mit einer Vorrichtung (10), enthaltend:
eine Kammer (13), die mit einem Pneumatikanschluss (14) verbunden ist,
eine elastische Form (17) für das stiftförmige Produkt, die in der Kammer angeordnet werden kann,
einen Halter (18) für die elastische Form (17) in der Kammer (13), der mindestens zwei in radialer Richtung der elastischen Form (17) bewegbare Halterschalen (19) aufweist, die die elastische Form (17) Umfangsrichtung umschließen,
einen Bewegungsmechanismus (15) für die Halterschalen (19), wobei der Bewegungsmechanismus (15) ein in axialer Richtung der elastischen Form (17) bewegbares Stellglied (21) enthält und das Stellglied (21) mit den Halterschalen (19) derart verbunden ist, dass eine axiale Bewegung des Stellglieds (21) die Halterschalen (19) in radialer Richtung der elastischen Form (17) bewegt,
wobei das Verfahren die Schritte enthält:
(a) Befüllen der elastischen Form (17) mit einer pastösen Masse und Einbringen der elastischen Form (17) in die Kammer,
(b) Spannen der elastischen Form (17) mit den Halterschalen (19),
(c) Erzeugen eines Unterdrucks in der Kammer (13), so dass sich der nicht durch die Halterschalen (19) gespannte Teil der elastischen Form (17) von dem stiftförmigen Produkt löst,
(d) Öffnen der Halterschalten (19) mittels des Bewegungsmechanismus (15), so dass sich die Halterschalen (19) in radialer Richtung nach außen bewegen, und durch den Unterdruck sich der restliche Teil der elastischen Form (17) von dem stiftförmigen Produkt löst, und
(e) Aufheben des Unterdrucks in der Kammer (13) und Entnehmen des stiftförmigen Produkts aus der Kammer.

12. Verfahren nach Anspruch 11, wobei die Vorrichtung (10) um die Halterschalen (19) herum eine Spanneinrichtung (23) aufweist, welche die Halterschalen (19) in radialer Richtung einwärts vorspannt, und
das Verfahren im Schritt (b) des Spannens der elastischen Form (17) weiter das Beaufschlagen der Spanneinrichtung (23) zum radial nach innen Vorspannen der Halterschalen (19) enthält, und
vor Schritt (d) das Lösen der Beaufschlagung der Spanneinrichtung (23) enthält.

## Geänderte Patentansprüche

### Geänderte Patentansprüche gemäss Regel 137(2) EPÜ.

1. Vorrichtung (10) zum Herstellen von stiftförmigen Produkten, enthaltend:
eine Kammer (13), die mit einem Pneumatikanschluss (14) verbunden ist,
eine elastische Form (17) für das stiftförmige Produkt, die in der Kammer angeordnet werden kann,
einen Halter (18) für die elastische Form (17) in der Kammer (13), der mindestens zwei bewegbare Halterschalen (19) aufweist, die die elastische Form (17) in Umfangsrichtung umschließen,
einen Bewegungsmechanismus (15) für die Halterschalen (19), wobei der Bewegungsmechanismus (15) ein in axialer Richtung der elastischen Form (17) bewegbares Stellglied (21) enthält und das Stellglied (21) mit den Halterschalen (19) verbunden ist,
**dadurch gekennzeichnet, dass** die Halterschalen (19) in radialer Richtung der elastischen Form (17) bewegbar sind, und dass eine axiale Bewegung des Stellglieds (21) die Halterschalen (19) in radialer Richtung der elastischen Form (17) bewegt.

2. Vorrichtung (10) nach Anspruch 1, wobei die Halterschalen (19) in einem unteren Bereich der elastischen Form (17) vorgesehen sind.

3. Vorrichtung (10) nach Anspruch 1 oder 2, wobei die elastische Form (17) eine Silikonform ist.

4. Vorrichtung (10) nach einem der vorhergehenden Ansprüche, wobei mindestens drei Halterschalen (19) vorgesehen sind.

5. Vorrichtung (10) nach einem der vorhergehenden Ansprüche, wobei um die Halterschalen (19) herum eine Spanneinrichtung (23) vorgesehen ist, welche die Halterschalen (19) in radialer Richtung einwärts vorspannt.

6. Vorrichtung (10) nach Anspruch 5, wobei die Spanneinrichtung (23) ein druckgesteuertes Hohlkammerprofil (23) enthält.

7. Vorrichtung (10) nach Anspruch 5 oder 6, wobei die Spanneinrichtung (23) in der Kammer vorgesehen ist.

8. Vorrichtung (10) nach einem der vorhergehenden Ansprüche, wobei das Stellglied ein Hubzylinder (21) ist.

9. Vorrichtung (10) nach einem der vorhergehenden Ansprüche, wobei das Stellglied (21) einen oberen Abschluss aufweist, der formschlüssig in Eingriff mit den Halterschalen (19) ist, so dass eine Bewegung des Stellglieds (21) in axialer Richtung eine Bewegung der Halterschalen (19) in radialer Richtung bewirkt.

10. Vorrichtung (10) nach Anspruch 9, wobei der obere Abschluss ein Aufsatz (22) ist, der nach unten zulaufend kegelstumpfförmig ist, und die Halterschalen (19) Kontaktflächen in Eingriff mit der Umfangsfläche der Kegelstumpfform aufweisen.

11. Verfahren zum Herstellen von stiftförmigen Produkten mit einer Vorrichtung (10), enthaltend:
eine Kammer (13), die mit einem Pneumatikanschluss (14) verbunden ist,
eine elastische Form (17) für das stiftförmige Produkt, die in der Kammer angeordnet werden kann,
einen Halter (18) für die elastische Form (17) in der Kammer (13), der mindestens zwei bewegbare Halterschalen (19) aufweist, die die elastische Form (17) Umfangsrichtung umschließen,
einen Bewegungsmechanismus (15) für die Halterschalen (19), wobei der Bewegungsmechanismus (15) ein in axialer Richtung der elastischen Form (17) bewegbares Stellglied (21) enthält und das Stellglied (21) mit den Halterschalen (19) verbunden ist, ,
wobei das Verfahren die Schritte enthält:
(a) Befüllen der elastischen Form (17) mit einer pastösen Masse und Einbringen der elastischen Form (17) in die Kammer,
(b) Spannen der elastischen Form (17) mit den Halterschalen (19),
(c) Erzeugen eines Unterdrucks in der Kammer (13), so dass sich der nicht durch die Halterschalen (19) gespannte Teil der elastischen Form (17) von dem stiftförmigen Produkt löst,
(d) Öffnen der Halterschalen (19) mittels des Bewegungsmechanismus (15), so dass sich die Halterschalen (19) bewegen, und durch den Unterdruck sich der restliche Teil der elastischen Form (17) von dem stiftförmigen Produkt löst, und
(e) Aufheben des Unterdrucks in der Kammer (13) und Entnehmen des stiftförmigen Produkts aus der Kammer,
**dadurch gekennzeichnet, dass** die Halterschalen (19) in radialer Richtung der elastischen Form (17) bewegbar sind, und eine axiale Bewegung des Stellglieds (21) die Halterschalen (19) in radialer Richtung der elastischen Form (17) bewegt, und
dass in Schritt (d) die Halterschalen (19) sich in radialer Richtung nach außen zum Öffnen der Halterschalen (19) bewegen.

12. Verfahren nach Anspruch 11, wobei die Vorrichtung (10) um die Halterschalen (19) herum eine Spanneinrichtung (23) aufweist, welche die Halterschalen (19) in radialer Richtung einwärts vorspannt, und
das Verfahren im Schritt (b) des Spannens der elastischen Form (17) weiter das Beaufschlagen der Spanneinrichtung (23) zum radial nach innen Vorspannen der Halterschalen (19) enthält, und
vor Schritt (d) das Lösen der Beaufschlagung der Spanneinrichtung (23) enthält.
